Europäisches Patentamt

European Patent Office

Office européen des brevets

(19)

(11) **EP 1 123 340 B1**

(12) **EUROPÄISCHE PATENTSCHRIFT**

(45) Veröffentlichungstag und Bekanntmachung des Hinweises auf die Patenterteilung:
**20.08.2003 Patentblatt 2003/34**

(21) Anmeldenummer: **98954366.5**

(22) Anmeldetag: **07.10.1998**

(51) Int Cl.$^7$: **C08G 65/20**, C08G 65/10, C08G 65/26

(86) Internationale Anmeldenummer:
**PCT/EP98/06370**

(87) Internationale Veröffentlichungsnummer:
**WO 00/020485 (13.04.2000 Gazette 2000/15)**

(54) **VERFAHREN ZUR HERSTELLUNG VON TETRAHYDROFURANPOLYMEREN**

METHOD FOR PRODUCING TETRAHYDROFURAN POLYMERS

PROCEDE DE PRODUCTION DE POLYMERES DE TETRAHYDROFURANE

(84) Benannte Vertragsstaaten:
**BE DE NL**

(43) Veröffentlichungstag der Anmeldung:
**16.08.2001 Patentblatt 2001/33**

(73) Patentinhaber: **Müller, Herbert**
**67227 Frankenthal (DE)**

(72) Erfinder: **Müller, Herbert**
**67227 Frankenthal (DE)**

(74) Vertreter: **Weiss, Wolfgang, Dipl.-Chem. Dr. et al**
**Weickmann & Weickmann**
**Patentanwälte**
**Postfach 86 08 20**
**81635 München (DE)**

(56) Entgegenhaltungen:
| | |
|---|---|
| **EP-A- 0 239 787** | **WO-A-94/05719** |
| **WO-A-96/23833** | **US-A- 5 208 385** |
| **US-A- 5 210 283** | |

**Beschreibung**

Diese Erfindung betrifft ein Verfahren zur diskontinuierlichen oder kontinuierlichen Herstellung von Tetrahydrofuranpolymeren durch Homopolymerisation von Tetrahydrofuran (THF) oder Copolymerisation von Tetrahydrofuran mit alkylsubstituierten Tetrahydrofuranen und/oder 1,2-Alkylenoxiden an ungesäuertem oder durch Säuren aktiviertem und calciniertem nätürlichem Aluminiumsilicat, bei dem man Homo- und Copolymere mit besonders enger Molekulargewichtsverteilung, einem vernachlässigbar geringen Gehalt an verunreinigenden oligomeren cyclischen Ethern und niedriger Farb- und Säurezahl erhält.

Die katalytische Bildung von Tetrahydrofuranpolymeren an Aluminiumsilicaten ist lange bekannt. In der GB-PS 845 958 wird ein Verfahren zur Copolymerisation von THF und Alkylenoxiden beschrieben, bei dem man die Polymerisation in Gegenwart von Verbindungen mit reaktivem Wasserstoff an Bleicherde-Katalysatoren durchführt. Bei diesem Verfahren fallen als Nebenprodukte verhältnismäßig große Mengen niedermolekularer Produkte an, die überwiegend aus oligomeren cyclischen Ethern bestehen. Die Molekulargewichtsverteilung der Tetrahydrofuranpolymere ist sehr breit. Sie kann abhängig vom mittleren Molekulargewicht einem Einheitlichkeitsquotienten $M_w/M_n = 3$ bis 4 für den Molekulargewichtsbereich von 1000 bis 2000 entsprechen ($M_w$ = Gewichtsmolekulargewicht und $M_n$ = Zahlenmittelmolekulargewicht). Die Polymere sind durchweg gelblich gefärbt, sind meist nicht streng bifunktionell und haben eine der Weiterverwendung zu Polyestern oder Polyurethanen abträgliche, hohe Säurezahl (meist > 0,1 mg KOH/g). Ein verbesserter Prozeß wird in der PCT-Anmeldung WO 96/23833 beschrieben, die die Verwendung von säurebehandelten und calcinierten synthetischen amorphen Aluminiumsilicaten, Kaolin oder Zeolithen für die Homo- und Copolymerisation von Tetrahydrofuran vorschlägt. Die danach erhältlichen Polymere, insbesondere die Copolymerisate zeigen eine signifikante Abweichung, größer als 1-2%, von der strengen Bifunktionalität auf, so daß sie als Weichsegment-Diol-Komponente von z.B. Spandex-Fasern nur bedingt geeignet sind. Insbesondere ist die Aktivität dieser Katalysatoren nicht konstant, sondern schwankt von Charge zu Charge. Dies ist trotz des niedrigen Preises ein gravierender Nachteil für die gewerbliche Nutzung dieser Katalysatoren. Nachteilig ist zusätzlich, daß nur extrem reines THF ein verwertbares Polymerisat liefert.

Die Homopolymerisation von THF durch Oxoniumionenkatalyse wurde als Ergebnis der grundlegenden Arbeiten von H. Meerwein et al. bekannt (Angew, Chemie 72, (1960), 927) und wird umfassend in der Monographie "Polytetrahydrofuran" von P. Dreyfuß, Gordon und Breach Sc. Publishers, New York, London, Paris 1982 abgehandelt. Die deutsche Auslegeschrift 1226560 beschreibt die Homopolymerisation des Tetrahydrofurans zu Polyoxybutylenglykoldiacetaten mit Montmorillonit-Katalysatoren. Pulverförmige Katalysatoren zeigen sich gekörnten überlegen (s. Spalte 4, Zeile 34-36). Dieses Verfahren liefert aber Produkte, die schon wegen der schlechten Farbe vor der Weiterverarbeitung aufwendig gereinigt werden müssen. Diese Problematik wird in der Offenlegungsschrift DE 3935750 beschrieben.

Oligomere cyclische Ether, die sich bei der Homo- und Copolymerisation bilden, sind unerwünschte Verunreinigungen der Polymerisate, da sie inertes Material darstellen und die Qualität der aus polymeren Glykolen hergestellten Endpolymerisate herabsetzen. Zu ihrer Verminderung sind schon verschiedene Vorschläge gemacht worden. So wird z.B. in EP-A-6107 der Vorschlag gemacht, die Copolymerisate bei höherer Temperatur mit einem aktivierten Montmorillonit zu behandeln. In der US-PS 4,127,513 wird der Vorschlag gemacht, als Katalysator einen besonders aktivierten Montmorillonit zu verwenden. Nachteilig sind bei diesem Prozeß die hohe Farbzahl der Polymerisate, eine verhältnismäßig geringe Polymerisationsgeschwindigkeit und ein Anteil an oligomeren cyclischen Ethern, der immer noch bei 5 bis 6 Gew.-% liegt.

Ein weiterer Verbesserungsvorschlag für die Copolymerisation von Alkylenoxiden mit Tetrahydrofuran unter dem katalytischen Einfluß von aktivierter Bleicherde ist der US-PS 4,228,272 zu entnehmen. Er sieht die Verwendung von Bleicherden mit einem bestimmten spezifischen Porenvolumen, einer definierten Katalysatoroberfläche und einem bestimmten Porendurchmesser vor. Der Oligomerengehalt ist aber mit 4 Gew.-% (vgl. Spalte 5, Zeilen 14 und 15) für die Anwendung der Copolymeren zur Herstellung von Polyurethanen, an die besondere mechanische Ansprüche gestellt werden, zu hoch. Bekanntlich liefern alle Verfahren zur Copolymerisation von Alkylenoxiden mit Tetrahydrofuran in Gegenwart von Bleicherden hochmolekulare Polymere mit endständigen Hydroxylgruppen, die stes durch einen mehr oder weniger hohen Gehalt an macrocyclischen Ethern ohne Hydroxylgruppen verunreinigt sind. Deshalb wurde auch vorgeschlagen, die cyclischen Ether durch eine Extraktion mit Kohlenwasserstoffen, Wasser oder überkritischen Gasen (US-Patentschriften 4,500,705, 4,251,654 und 4,306,056) zu entfernen.

Weiterhin ist gemäß der EP-A-104 462 die Bildung cyclischer Ether in erster Linie eine unvermeidbare Nebenreaktion der kationischen ringöffnenden Polymerisation und vom verwendeten Katalysator weitgehend unabhängig. Es war daher nicht davon auszugehen, daß durch spezifische Katalysatorauswahl die Entstehung der cyclischen Ether unterdrückt wird.

Sämtliche bislang beschriebenen Katalysatoren haben den Nachteil, daß ihre Lebensdauer stark von der Reinheit des verwendeten Tetrahydrofurans abhängt. Insbesondere verkürzt sich ihre Lebensdauer erheblich, wenn Tetrahydrofuran mit Carbonylverbindungen, wie beispielsweise Estern, Ketonen oder Aldehyden, auch in geringen Konzentrationen von z.B. 2 bis 10 ppm verunreinigt ist. Solch ein Monomer von geringer Qualität, wie es beispielsweise bei der Decarbonylierung und anschließender Hydrierung von Furfural oder bei der Hydrierung von Maleinsäureanhydrid anfällt, muß nach den bislang beschriebenen Verfahren stets einer aufwendigen Raffination unterworfen werden, damit die Lebensdauer des Katalysators sich nicht verkürzt.

In der DE-OS 3 346 136 wird ein Verfahren zu Copolymerisation von Alkylenoxiden und THF beschrieben, bei dem sich der Anfall an cyclischen oligomeren Ethern dadurch unter 2 Gew.-% zurückdrängen läßt, daß man kontinuierlich in einem Reaktor polymerisiert und dem im Kreis geführten Reaktionsgemisch weniger als 30 Gew.-% an Frischzulauf aus THF und 1,2-Alkylenoxid zuführt. Bei diesem Verfahren ist nachteilig, daß Polymerisate entstehen, die eine breite Molekulargewichtsverteilung aufweisen. So liegt der Einheitlichkeitsquotient $M_w/M_n$ hier bei über 4.

Aus der EP-A-0 104 609 ist bekannt, daß man Polyoxybutylenoxyalkylenglykoldiester mit einem niedrigen Gehalt an oligomeren cyclischen Ethern erhält, wenn man die Copolymerisation von THF mit einem 1,2-Alkylenoxid in Gegenwart von Carbonsäurenanhydrid und Bleicherde mit einem Wassergehalt von weniger als 3 Gew.-% durchführt. Auch bei diesem Verfahren erhält man Copolymerisate mit einer nicht ausreichend engen Molekulargewichtsverteilung. Auch die neuerdings bekannt gewordenen Verfahren, mit Bleicherden oder amorphen Aluminiumsilicaten zu polymerisieren, sind nicht zufriedenstellend (US-PS 5,208,385 und 5,210,283). Es werden nur sehr uneinheitliche Polymere erhalten, die zudem gefärbt sind und mit Säurezahlen von > 0,1 KOH/g belastet sind.

In EP-A-0 239 787 wird der Vorschlag gemacht, durch diskontinuierliche Copolymerisation an Bleicherde-Katalysatoren in Gegenwart von Telogenen mit reaktivem Wasserstoff und einer konstanten aber niedrigen 1,2-Alkylenoxid-Konzentration die Molekulargewichtsverteilung eng zu gestalten und die Bildung oligomerer cyclischer Ether herabzusetzen.

Trotzdem besteht nach wie vor sowohl bei Homo- als auch bei Copolymeren das Bedürfnis, die Molekulargewichtsverteilung unter 1,3 bis 2,5 für Molekulargewichte zwischen 1000 und 2000 auf beispielsweise 1,1 bis 2,0 zu drücken, und den Anfall an oligomeren cyclischen Ethern auf unter 1 Gew.-% zu begrenzen. Niedermolekulare Polymere mit durchschnittlichem Molekulargewicht unter 200 sollten nach anzustrebenden Verfahren, wenn überhaupt, zu höchstens 1 Gew.-% entstehen. Ein zusätzlicher Reinigungsschritt zur Abtrennung dieser Produkte, der bei den z.Z. ausgeübten Verfahren notwendig ist, könnte dann unterbleiben.

Aufgabe der vorliegenden Erfindung war es also, ein Verfahren zur Herstellung hochwertiger Polymere und Copolymere aus THF und Alkylenoxid oder/und alkylsubstituierten Tetrahydrofuranen bereitzustellen, bei dem die Bildung merklicher Mengen oligomerer cyclischer Ether vermieden wird, und farblose Polymerisate oder Copolymerisate mit enger Molekulargewichtsverteilung $M_w/M_n$ von etwa 1,1 bis 2,0 bei Molmassen zwischen 1000 und 2000 mit niedriger Säurezahl erhalten werden.

Gelöst wird diese Aufgabe erfindungsgemäß durch ein Verfahren zur kontinuierlichen oder diskontinuierlichen Herstellung von Tetrahydrofuranpolymeren durch Polymerisation von THF oder/und substituierten Tetrahydrofuranen oder Copolymerisation von THF oder/und substituierten Tetrahydrofuranen mit Alkylenoxiden unter Verwendung von Allophan-Tonen als Katalysator und Steuern der Reaktantenkonzentration wie nachfolgend erläutert.

Gemäß einem ersten Aspekt betrifft die vorliegende Erfindung somit ein Verfahren zur diskontinuierlichen oder kontinuierlichen Herstellung von Polytetramethylenethergolykoldiestern durch Polymerisation von Tetrahydrofuran oder/und substituierten Tetrahydrofuranen in Gegenwart von Carbonsäureanhydrid und eines Katalysators, welches dadurch gekennzeichnet ist, daß der Katalysator ein ungesäuerter oder protonisierter und calcinierter natürlicher amorpher Aluminiumsilicat-Katalysator ist, und daß man das Carbonsäureanhydrid dem Reaktionsgemisch so zuleitet, daß dessen Konzentration darin während der Polymerisation unter 1 Gew.-% gehalten wird.

Gemäß einem zweiten Aspekt betrifft die vorliegende Erfindung ein Verfahren zur diskontinuierlichen oder kontinuierlichen Herstellung von Polyoxybutylenpolyoxyalkylenglykolderivaten durch Copolymerisation von Tetrahydrofuran oder/und substituierten Tetrahydrofuranen mit Alkylenoxiden in Gegenwart von Verbindungen mit reaktivem Wasserstoff und eines Katalysators, welches dadurch gekennzeichnet ist, daß der Katalysator ein ungesäuerter oder protonisierter und calcinierter natürlicher amorpher Aluminiumsilicat-Katalysator ist, und daß man das Alkylenoxid dem Reaktionsgemisch so zuleitet, daß dessen Konzentration darin während der Polymerisation unter 1 Gew.-% gehalten wird.

Als substituierte Tetrahydrofurane kommen beispielsweise in 2- oder/und 3-Position substituierte Tetrahydrofurane in Betracht. Als Substituenten seien z.B. Arylreste, lineare oder verzweigte Alkylreste oder Alkoxysubstituenten genannt. Vorzugsweise wird man 3-Methyltetrahydrofuran verwenden. Substituierte Tetrahydrofurane werden im allgemeinen in Mengen von etwa 0,5 bis 20 Gew.-% bezogen auf das THF, als Reinsubstanzen oder als Gemische, eingesetzt.

Als Alkylenoxide kommen substituierte oder unsubstituierte Alkylenoxide in Betracht. Als Substituenten seien z.B. lineare oder verzweigte Alkylgruppen mit 1 bis 6, vorzugsweise 1 bis 2 C-Atomen, Phenylreste, durch Alkyloder/und Alkoxygruppen mit 1 bis 2 C-Atomen oder Halogenatome substituierte Phenylreste oder Halogenatome, vorzugsweise Chloratome genannt. Besonders geeigente Alkylenoxide sind 1,2-Butylenoxid, 2,3-Butylenoxid, Styroloxid, Epichlorhydrin und vorzugsweise Ethylenoxid und 1,2-Propylenoxid. Die Alkylenoxide werden in einer Gesamtmenge, entsprechend einem Molverhältnis THF: Alkylenoxid von 50:1 bis 1:1, bevorzugt 30:1 bis 5:1 und in einer Konzentration unter 1 Gew.-% eingesetzt.

Geeignete Carbonsäureanhydride leiten sich von aliphatischen oder aromatischen Carbonsäuren mit z.B. 2 bis 8 C-Atomen ab. Genannt seien z.B. Essigsäureanhydrid, Buttersäureanhydrid, Acrylsäureanhydrid oder Phtalsäureanhydrid. Die Carbonsäureanhydride werden in einer Gesamtmenge von 0,1 bis 50, bevorzugt 0,5 bis 20 Mol-%, bezogen auf THF und substituiertes THF, eingesetzt, die Konzentration im Reaktionsgemisch wird dabei unter 1 Gew.-% gehalten.

Telogene mit reaktivem Wasserstoff sind beispielsweise Wasser, ein- und mehrwertige Alkohole, wie Methanol, Ethanol, Propanol, Ethylenglykol, Butylenglykol, Glycerin, Neopentylglykol und 1,4-Butandiol sowie insbesondere Carbonsäuren mit 1 bis 12, bevorzugt mit 1 bis 8 Kohlenstoffen. Auch Polytetramethylenetherglykol (PTMEG) kann als Verbindung mit reaktivem Wasserstoff bei der Copolymerisation verwendet werden. Die Verbindungen mit reaktivem Wasserstoff werden in Abhängigkeit vom gewünschten Molekulargewicht üblicherweise in einer Gesamtmenge von bis zu 20 Mol-%, häufig von 0,01 bis 10, beispielsweise 0,03 bis 3 Mol-%, bezogen auf THF und substituiertes THF, eingesetzt.

Am einfachsten und am wirtschaftlichsten gestaltet sich das Verfahren, wenn Essigsäureanhydrid bei der Homopolymerisation von THF oder Copolymerisation von THF und substituierten Tetrahydrofuranen bzw. Wasser bei der Copolymerisation mit Alkylenoxiden verwendet wird. Wasser und mehrwertige Alkohole führen zur Bildung von Polyetheralkoholen, die zwei- oder mehrfach funktionell sein können. Da man beim Einsatz von Carbonsäuren polymere Halbester erhält, unterwirft man die Estergruppen enthaltenden Copolymere einer an sich üblichen Verseifung. Dies gilt auch für Homopolymere mit Estergruppen. Man verfährt dabei z.B. so, daß man die Homo- oder Copolymerisate in Anwesenheit oder Abwesenheit von inerten Lösungsmitteln mit wäßrigen Alkalihydroxiden erhitzt oder besser, z.B. nach Methoden, wie sie in der US-PS 2499725 oder in J.Am. Chem. Soc. Bd. 70, S. 1842, beschrieben werden, unter der katalytischen Wirkung eines Alkalialkoholates einer Umesterung mit z.B. Methanol, unterwirft.

Die erfindungsgemäß als Katalysator zu verwendenden Allophan-Tone sind natürlich vorkommende amorphe, wasserhaltige, säurezersetzliche Tonerde-Silicate der Formel $x$-$Al_2O_3 \cdot ySiO_2 \cdot zH_2O$, mit einem Verhältnis von x:y in den Grenzen von etwa 1:1 bis 1:14 und einem schwankenden Wassergehalt von etwa 10 bis 55 Gew.-%. Allophan-Tone sind die Verwitterungsprodukte der tonerdehaltigen Silicate und die Hauptbestandteile des lehmigen und tonigen Ackerbodens und finden vorwiegend als feuerfeste Spezialschamotte zum Auskleiden von Feuerungen und Hochöfen Verwendung. Reiner Allophan (Allophanit) ist derb in verschiedenen Formen und als Überzug, mit opalartigem Ausehen. Das Mineral ist spröde, farblos oder verschieden gefärbt. Seine Dichte beträgt 1,9 und seine Härte etwa 3. Als Verwitterungsprodukte der Silicat-Gesteine sind Allophane die Hauptbestandteile der tonigen und lehmigen Böden, z.B. Lößböden, aus denen sich die erfindungsgemäßen Katalysatoren ebenfalls präparieren lassen, kommen somit ubiquitär vor und sind kostengünstig zu beschaffen.

Verglichen mit den natürlich vorkommenden Bleicherden, Kaolin und synthetischen, amorphen Aluminiumsilicaten, wie sie in der PCT-Anmeldung WO 96/23833 beschrieben werden, besitzen die natürlichen amorphen Aluminiumsilicate (Allophane), die erfindungsgemäßen Katalysatoren, den nicht unerheblichen Vorteil, daß die katalytische Aktivität durch Kontrolle des Herstellungsprozesses angepaßt werden kann. Aluminiumsilicate besitzen saure Zentren auf ihrer Oberfläche, deren Stärke die Aktivität und Selektivität des Katalysators bestimmt. Aktivität und Selektivität des Katalysators können während des Herstellungsprozesses kontrolliert werden. Brönstedt- und Lewis Säuren sind saure Zentren, die bevorzugt nach der Behandlung mit $NH_4Cl$-Lösungen und Calcinieren in Übereinstimmung der Gleichungen (1) und (2) gebildet werden.

$$NH_4AlO_2 \cdot n\ SiO_2 \rightarrow NH_3 + HAlO_2 \cdot n\ SiO_2 \qquad (1)$$

$$2\ HAlO_2 \cdot n\ SiO_2 \rightarrow H_2O + Al_2O_3 \cdot n\ SiO_2 \qquad (2)$$

Die sauren Zentren können auch durch Behandlung mit organischen oder anorganischen Säuren, wie beispielsweise Ameisensäure, Essigsäure, Benzoesäure, Acrylsäure, verdünnter Salzsäure, Schwefelsäure, Salpetersäure oder Phosphorsäure, und anschließendem Waschen mit Wasser erhalten werden.

Die erfindungsgemäßen Katalysatoren sind, im Gegensatz zu den synthetischen, amorphen Aluminiumsilicaten, wie sie in der PCT-Anmeldung WO 96/23833 beschrieben werden, auch ohne Säurebehandlung aktive Polymerisationskatalysatoren. Im Gegensatz zu den säureaktivierten Katalysatoren reagieren sie neutral bis schwach basisch und sind daher nicht korrosiv.

Bevorzugt liegen die erfindungsgemäßen Katalysatoren in fester Form vor, d.h. beispielsweise als Granulat oder als Formkörper. Typischerweise weisen solche Granulate oder Formkörper einen mittleren Durchmesser von 0,5 bis 10, vorzugsweise von 1 bis 8 mm auf.

Um Katalysatorformkörper für das erfindungsgemäße Verfahren herzustellen, kann man das nicht-säureaktivierte oder säureaktivierte Katalysatorpulver mit Wasser anteigen, zu Strangpreßlingen extrudieren oder in Kugelformmaschinen zu Kugeln von z.B. 4 mm Durchmesser verarbeiten. Es folgt dann eine Wärmebehandlung (Calcinierung) zur Festigung der Struktur, zum Trocknen und gegebenenfalls zum Überführen der Ammoniumionen in Brönstedtsäuren gemäß der Gleichung $NH_4AlO_2 \cdot SiO_2 \rightarrow NH_3 + HAlO_2 \cdot SiO_2$.

Das erfindungsgemäße Verfahren wird kontinuierlich der diskontinuierlich an bevorzugt festen Katalysatoren durchgeführt. Damit das Gemisch aus substituiertem oder/und unsubstituiertem Tetrahydrofuran, Alkylenoxid und der Verbindung mit aktivem Wasserstoff oder aus unsubstituiertem oder/und substituiertem Tetrahydrofuran und Carbonsäureanhydrid intensiv mit dem Katalysator in Berührung kommt, bewegt man entweder den Festkatalysator in den Ausgangskomponenten oder die Mischung der Reaktionskomponenten im Verhältnis zum statisch angeordneten Festkatalysator.

Im ersten Fall verwendet man z.B. gerührte Gefäße, in denen die Katalysatorkörner suspendiert sind. im zweiten Falle verfährt man beispielsweise so, daß man das Gemisch der Reaktionskomponenten über den fest angeordneten Katalysator leitet. Die zweite Verfahrensvariante wird aus verschiedenen Gründen bevorzugt. Sie ermöglicht z.B. eine saubere Temperaturführung und die Gewinnung eines katalysatorfreien Reaktionsgemisches.

Die Katalysatorformkörper werden in einem Rekator z.B. durch einfaches Aufschütten fest angeordnet. Das vom Reaktionsgemisch durchströmte Katalysatorbett muß auch nach längerem Betrieb nicht erneuert werden, da die Katalysatorformkörper ihre ursprünglich feste Form behalten und keinen Abrieb erleiden. Die Katalysatoren zeichnen sich durch einen geringen Aktivitätsverlust aus und besitzen eine fast unbegrenzt lange Lebensdauer.

Als Reaktoren eignen sich für das erfindungsgemäße Verfahren z.B. säulenförmige Reaktionsgefäße, bei denen der Rohrdurchmesser etwa 10 bis 100 mm beträgt, wenn die Wärmetönung im Reaktionsgefäß abgeführt werden soll. Will man die Temperatur durch einen im äußeren Kreislauf eingebauten Wärmetauscher regulieren, so kann man als Reaktor auch einen Schachtofen verwenden.

Durch den Reaktor wird das Gemisch der Ausgangsstoffe z.B. mittels einer Umlaufpumpe geleitet. Dabei hält man die Konzentration des Alkylenoxides oder des Carbonsäureanhydrids im Reaktionsgemisch während der Polymerisation unter 1 Gew.-%, vorteilhaft zwischen 0,1 bis 0,8 Gew.-% und insbesondere bei 0,1 bis 0,5 Gew.-%. Gleichzeitig sorgt man für eine im wesentlichen konstante Konzentration des Alkylenoxids oder des Carbonsäureanhydrids im Reaktionsgemisch. Die Abweichung vom Sollwert der Konzentration an Carbonsäureanhydrid oder Alkylenoxid im Reaktionsgemisch soll 10 Gew.-% nicht überschreiten. Das Reaktionsgemisch wird solange im Kreis gepumpt, bis der gewünschte Umsatzgrad erreicht ist. Die Dauer der Reaktionszeit, während der das Reaktionsgemisch über den im Reaktor angeordneten Katalysator gepumpt wird, kann bei Copolymeren in Abhängigkeit von der gewünschten copolymeren Zusammensetzung in verhältnismäßig weiten Grenzen variiert werden. Will man z.B. ein Copolymer erhalten, das in der Endzusammensetzung aus etwa 20 Gew.-% Alkylenoxid besteht, und hält man die Konzentration des Alkylenoxids im Reaktionsgemisch während der gesamten Umsetzung konstant bei 0,2 Gew.-%, so erreicht man nach ca. 5 bis 10 Stunden eine Umsetzung von ca. 50 Gew.-%, sofern sich Katalysatorvolumen und ständlich umgewälzte Reaktionsmischung etwa im Verhältnis 1:1 bis 1:5 bewegen. Das Verhältnis des Gesamtvolumens der Reaktionskomponenten zum Katalysatorvolumen liegt zwischen den Werten 10:1 und 1:1. Die benötigte Reaktionszeit ist umgekehrt proportional zur angewendeten Alkylenoxid-Konzentration in der Reaktionsmischung.

Die Einsatzstoffe THF, substituierte Tetrahydrofurane, Alkylenoxid bzw. Carbonsäureanhydrid werden zweckmäßigerweise in möglichst reiner Form eingesetzt. Dadurch wird eine lange Lebensdauer der Katalysatoren gewährleistet. Eine aufwendige Reinigung von Tetrahydrofuran mit starken Mineralsäuren, organischen Sulfonsäuren, Silicaten oder Bleicherden nach dem in der EP-OS 3112 beschriebenen Verfahren, ist bei den erfindungsgemäßen Katalysatoren nicht notwendig, selbst wenn das THF bis zu 2 Gew.-% mit Carbonylgruppen-haltigen Komponenten, wie Ester, Aldehyde oder Ketone, verunreinigt ist. Eine THF dieser Qualität erhält man z.B. bei der Decarbonylierung mit anschließender Hydrierung von Furfural oder bei der Hydrierung von Maleinsäureanhydrid. Es lassen sich verschiedene Alkylenoxide wie auch Mischungen verschiedener Verbindungen mit aktivem Wasserstoff gleichzeitig in einem Reaktionsansatz einsetzen.

Das Molverhältnis zwischen der eingesetzten Menge an Tetrahydrofuranen, unsubstituiert oder/und substituiert, und der Menge an Alkylenoxid oder Carbonsäureanhydrid liegt z.B. zwischen 50:1 und 5:1, vorzugsweise zwischen 25:1 und 10:1. Wichtig ist, daß man bei der Zugabe des Alkylenoxids oder Carbonsäureanhydrids dafür sorgt, daß dessen Konzentration im Gemisch unter 1 Gew.-% bleibt. Es empfiehlt sich, das Molverhältnis der Monomeren am Katalysator während der überwiegenden Reaktionszeit, vorzugsweise während 80 bis 99% der Gesamtreaktionszeit, möglichst konstant zu halten. Lediglich bei einer Nachreaktionszeit kann die Konzentration an Alkylenoxid durch vollständige Abreaktion bis auf 0 abfallen. Die wünschenswerte Konstanz der Alkylenoxid-Konzentration im Reaktionsgemisch erreicht man dadurch, daß der Monomerenmischung das Alkylenoxid oder Säureanhydrid in dem Maße zugeführt wird, wie sich dessen Konzentration durch Polymerisation im Reaktionsansatz verändert. Für die Copolymerisation gilt, daß die Menge an Alyklenoxid, die im gesamten zeitlichen Verlauf zur Polymerisation gebracht wird, in sehr breiten Grenzen schwanken kann. Copolymere, die sich zu interessanten Endprodukten verarbeiten lassen, enthalten z.B. 5 bis 50, insbesondere 10 bis 30 Gew.-% Alkylenoxid. Nach Beendigung der Umsetzung ist Alkylenoxid oder Carbonsäureanhydrid wünschenswerterweise vollständig umgesetzt, während überschüssiges unsubstituiertes und/oder substituiertes Tetrahydrofuran, das in Abwesenheit des Alkylenoxids oder Carbonsäureanhydrids am Katalysator nicht weiterreagiert, als Lösungsmittel für das Copolymer im Gemisch verbleibt. Die Konzentration des Polymers im Tetrahydrofuran liegt z.B. bei 20 bis 60 Gew.-%.

Die Polymerisation am fest angeordneten Katalysatorbett oder im bewegten Katalysatorbett führt man zweckmäßig im Temperaturbereich von 0 bis 70°C, vorzugsweise zwischen 30 und 60°C bei Normaldruck oder leicht erhöhtem Druck bis 3 bar durch.

Nach der bevorzugten Arbeitsweise leitet man das Gemisch der Ausgangsstoffe für die Polymerisation durch den Reaktor, wobei man das den Reaktor verlassende Reaktionsgemisch durch erneute Zugabe von Alkylenoxid oder Säureanhydrid auf die gewünschte und möglichst konstante Konzentration einstellt. Die Zugabe der Verbindung mit reaktivem Wasserstoff erfolgt in den meisten Fällen durch ein Konzentrationseinstellung im Tetrahydrofuran zu Beginn der Reaktion. Wenn es gewünscht wird, kann die Zugabe der Verbindung mit reaktivem Wasserstoff auch laufend erfolgen. Im allgemeinen wird man aber auf diese Maßnahme verzichten. Das Reaktionsgemisch für die Copolymerisation, das laufend bei möglichst konstanter Alkylenoxid-Konzentration gehalten wird, führt man solange im Kreise über das Katalysatorbett, bis die gewünschte Menge Alkylenoxid, die später im Copolymerisat enthalten sein soll, der zuvor festgelegten Menge Tetrahydrofuran zugeführt wurde. Bei der Homopolymerisation von THF wird je nach gewünschtem Molekulargewicht die Carbonsäureanhydrid-Konzentration in der Zulaufmischung eingestellt. Bei der Copolymerisation von THF und substiuierten Tetrahydrofuranen wird eine möglichst konstante Konzentration von THF und substituierten Tetrahydrofuranen in der Ausgangsmischung eingestellt und je nach gewünschtem Molekulargewicht die Carbonsäureanhydrid-Konzentration in der Zulaufmischung eingestellt.

Im allgemeinen liegt die benötigte Reaktionszeit für einen vollständigen Umsatz zwischen 2 und 20, vorzugsweise zwischen 4 und 10 Stunden.

Aus dem Reaktionsgemisch gewinnt man das Polymer in reiner Form durch Abdampfen des nicht umgesetzten Tetrahydrofurans. Letzteres kann für eine neue Polymerisation verwendet werden.

Die Polymerisation verläuft exotherm. Deshalb sorgt man durch Kühlung des Reaktors oder des Stromes des Reaktionsgemisches, der außerhalb des Reaktors im Kreislauf gepumpt wird, für Temperaturkonstanz.

Die bei der Polymerisation erhaltenen Produkte, insbesondere solche mit Molekulargewichten von 200 bis 5000 sind für die Herstellung von Polyurethanen oder Polyestern hervorragend geeignet. Werden bei der Polymerisation als Startermoleküle Carbonsäuren oder Carbonsäureanhydride verwendet, so entstehen primär Ester, die wie oben angegeben vor der Umsetzung mit Diisocyanaten oder Dicarbonsäuren zu Glykolen verseift werden. Die aus den Polymeren hergestellten Fertigpolymerisate besitzen ein hohes mechansches Niveau bei guter Kälte-, Mikroben- und Verseifungsfestigkeit. Im Vergleich zum hochpolymeren Polytetramethylenetherglykol (PTMEG) haben die Copolymere einen niedrigen Erstarrungspunkt und eine geringere Viskosität. Sie lassen sich also ohne zusätzlichen Verflüssigungsund Schmelzprozeß für die Weiterverarbeitung verwenden. Dies gilt insbesondere für Copolymere aus Tetrahydrofuran, substituierten Tetrahydrofuranen und Alkylenoxiden, die aufgrund des geringeren Sauerstoffanteils, gegenüber den Copolymeren aus Tetrahydrofuran und Alkylenoxiden zusätzlich eine wünschenswerte geringere Hydrophilie und somit eine erniedrigte Hydrolysetendenz und nur geringes Quellungsvermögen in Wasser aufweisen.

Das erfindungsgemäße Verfahren hat den erheblichen Vorteil, daß bei der Polymerisation praktisch keine Nebenprodukte, insbesondere nur sehr geringe Anteile cyclischer Oligomere gebildet werden, und daß die Reaktion bis zu einem vollständigen Umsatz des Alkylenoxids, des Carbonsäureanhydrids und der Verbindung mit reaktivem Wasserstoff geführt werden kann. Unerwartet und mit den Erfahrungen auf dem Polymerisationsgebiet nicht ohne weiteres zu erklären, besitzen die erfindungsgemäß hergestellten Polymere eine sehr enge Molekulargewichtsverteilung, die beispielsweise für Polymerisate mit dem Molekulargewicht um 1000 bis 1500 im Bereich eines Heterogenitätsquotienten $M_w/M_n$ von 1,1 bis 1,3 liegt. Dagegen weisen die durch bislang bekannte kontinuierliche und diskontinuierliche Verfahren erhältlichen Polymerisate mit Molekulargewichten von 1000 bis 1500 im Durchschnitt Heterogenitätsquotienten $M_w/M_n$ von 1,4 bis 2,5 auf.

Ebenfalls unerwartet sind nach dem erfindungsgemäßen Verfahren niedermolekulare Polymere mit Molekulargewichten zwischen 200 und 500 auf zwei verschiedene Weisen zugänglich, ohne daß es einer aufwendigen, zusätzlichen Extraktion der Verunreinigungen, im wesentlichen der cyclischen Kronenether, wie sie z.B. in den US-Patentschriften 4,500,705 und 4,638,097 beschrieben sind, bedarf. Nach dem erfindungsgemäßen Verfahren können niedermolekulare Homo- und Copolymere mit Molekulargewichten zwischen 200 und 500 entweder direkt durch Einstellen der Konzentration an Carbonsäureanhydrid bzw. der Konzentration an Verbindungen mit reaktivem Wasserstoff erhalten werden, oder vorzugsweise durch Abdestillieren der niedermolekularen Fraktionen aus höhermolekularen Polymerisaten im Vakuum durch Kurzwegdestillation, z.B. bei einer Temperatur von 250°C und einem Druck von 5 bis 0,001 mbar. Nach beiden Verfahrensweisen erhält man Polymere mit dem geringen Gehalt an cyclischen Oligomeren von unter 0,8 Gew.-%.

Polymere mit enger Molekulargewichtsverteilung und geringem Gehalt an inerten cyclischen Oligomeren sind bei der Weiterverarbeitung zu Polyurethanen, Polyestern und insbesondere zu Spandex (Elastan)-Fasern eher geeignet, Produkte mit wertvollem mechanischen Niveau zu liefern, als Einsatzprodukte, die hinsichtlich der Molekulargewichtsverteilung sehr uneinheitlich sind. Unerwartet war auch, daß das erfindungsgemäße Verfahren Copolymerisate mit äußerst niedriger Farbzahl liefert. Dem Fachmann ist nämlich bekannt, daß Polymerisate, die man durch kationische Polymerisation erhält, meist tief gefärbt sind und erst durch zusätzliche Maßnahmen wie Hydrierung raffiniert werden müssen. Die Polymerisate weisen pro Molekül 2 Äquivalente Hydroxyl- bzw. Estergruppierung auf.

Erstaunlicherweise sind auch die copolymeren Produkte nahezu zu 100% bifunktionell, obwohl von Alkylenoxid-Polymeren bekannt ist, daß sie meist keine strenge Bifunktionalität aufweisen. In der PCT-Anmeldung WO 96/23833 wird ein wesentlich verbessertes Verfahren mit u.a. synthetischen, amorphen Aluminiumsilicaten als Katalysatoren beschrieben. Die danach erhaltenen Polymere, insbesondere die Copolymerisate zeigen dennoch eine signifikante Abweichung, größer als 1 bis 2%, von der strengen Bifunktionalität auf, so daß sie als Weichsegment-Diol-Komponente von Spandex-Fasern nur bedingt geeignet sind. Die nach dem erfindungsgemäßen Verfahren hergestellten Homo- und Copolymere sind ohne notwendige zusätzliche Raffination selbst für das anspruchsvolle Gebiet der Spandex-Fasern gut geeignet. Dieses im höchsten Maße wünschswerte Ergebnis wird u.a. durch den verwendeten natürlichen Katalysator in Granulatform erreicht, der den synthetischen amorphen Aluminiumsilicat-Katalysatoren in Bezug auf Aktivität, Selektivität, Lebensdauer und Reinheit der Polymeren weit überlegen ist. Außerdem ist er wohlfeil.

Ein wichtiger Vorzug des Verfahrens ist es, daß die Reaktionsgemische, in denen die Polymerisate in Konzentrationen von 40 bis 70% enthalten sind, nur der Befreiung von überschüssigem Tetrahydrofuran bedürfen, um der Endanwendung, z.B. der Herstellung von Polyurethanen, Polyestern oder Spandex-Fasern zugeführt werden können. Das zweckmäßig durch Destillation im Vakuum zu entfernende Tetrahydrofuran kann erneut, ohne daß es einer Reinigungsoperation bedarf, für die Umsetzung verwendet werden.

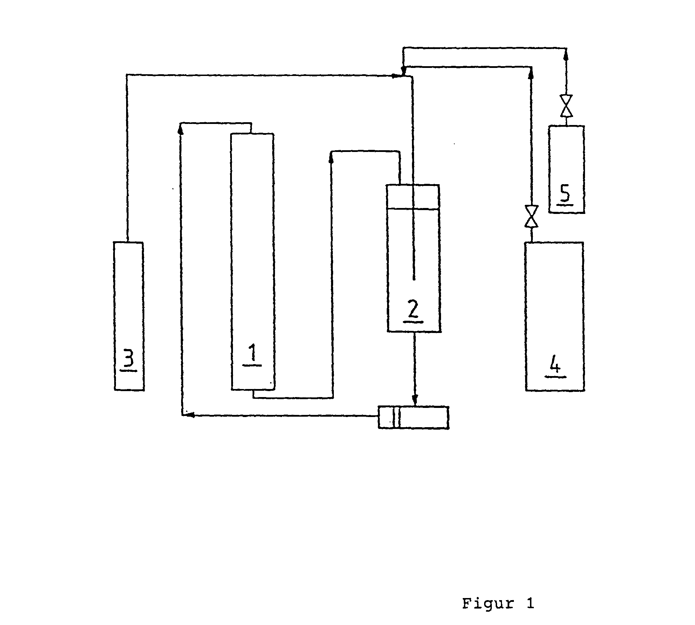

Abbildung 1 ist eine Schemazeichnung einer Reaktoranlage, welche die Durchführung der in Beispiel 3 beschriebenen Ausführungsform des erfindungsgemäßen Verfahrens gestaltet.

Die folgenden Beispiele sollen das erfindungsgemäße Verfahren erläutern, ohne es zu begrenzen. Die genannten Teile sind Gewichtsteile, sie verhalten sich zu Volumenteilen wie Kilogramm zu Litern.

**Beispiele**

**1. Homopolymerisation von THF**

Ein wasserfreies amorphes natürliches Aluminiumsilicat der Zusammensetzung 50% $SiO_2$, 50% $Al_2O_3$ (Lieferant: Firma J. T. Baker Inc., Phillipsburg (New Jersey)), wird in eine Duranglas-Laborflasche der Firma Schott, Mainz, gefüllt, im Wasserbad auf 50°C vorgewärmt und mit 300 g einer Mischung, die aus 99,5 Gew.-% THF, mit 700 ppm Ethylacetat, und 0,5 Gew.-% Essigsäureanhydrid besteht, überstellt. Die dicht mit einer Polypropylenschraubkappe verschlossene Flasche wird im Wasserbad bei 50°C 10 Stunden lang langsam um die Längsachse gedreht, um die Katalysatorschüttung in leichter Bewegung zu halten. Im zeitlichen Abstand von einer Stunde werden noch 8 Protionen Essigsäureanhydrid der Reaktionsmischung zugefügt, wobei darauf geachtet wird, daß die Konzentration des Essigsäureanhydrids unter 1 Gew.-% gehalten wird. Durch Waschen mit 3 %iger Salzsäure und Trocknen bei 550°C wurde der Katalysator zuvor in die protonierte Form überführt.

Das Reaktionsgemisch wird danach vom Katalysator dekantiert und untersucht. Aus der Säurezahl des Reaktionsproduktes läßt sich ein etwa 99,6 %iger Umsatz des Essigsäureanhydrids ableiten.

Bei 150°C und 5 mbar dampft man das unumgesetzte THF vom entstandenen Polytetramethylenetherglykoldiacetat ab, das zu 56 Gew.-% in der Reaktionslösung enthalten war. Die Verseifungszahl des Diesters beträgt 152,6 mg KOH/g, was einem Molekulargewicht von 734 g/mol entspricht. Durch Umestern mit der gleichen Menge Methanol in Gegenwart von z.B. 0,01 Gew.-% Natriummethylat erhält man daraus PTHF mit der Hydroxylzahl 173 mg KOH/g und der Farbzahl 4 APHA. Das Produkt zeigt eine sehr enge Molekulargewichtsverteilung. Der Heterogenitätsquotient (Polydispersität) $M_w/M_n$ beträgt nur 1,08. Der Gehalt an oligomeren cyclischen Ethern ist kleiner 0,01 Gew.-%. Die Lebensdauer des Katalysators ist trotz der geringen THF-Reinheit länger als 3 Jahre.

**2. Homopolymerisation von THF**

Eine Probe eines amorphen Tons aus dem Fördergebiet 67304 Eisenberg/-Pfalz, das freundlicherweise von der Eisenberger Klebsandwerke GmbH zur Verfügung gestellt wurde, wurde dreimal mit der fünffachen Menge an VE-Wasser gewaschen, mit 1 %iger Salzsäure überstellt, neutral gewaschen, getrocknet, in Granulatform mit den Abmessungen von ca. 3 mm gebracht und bei 550°C 2 Stunden bis zur Gewichtskonstanz calciniert.

Die Polymerisation wird in der in Beispiel 1 beschriebenen Versuchsanordnung bei 50°C mit dem präparierten Granulat-Katalysator durchgeführt.

Für die Polymerisation wurden insgesamt 9 g Essigsäureanhydrid und 300 g THF, kontaminiert mit 3 g Methylacetat und 1 g Butyraldehyd, verwendet. Nach 5 Stunden Polymerisation hat Essigsäureanhydrid zu über 99% reagiert, und die Polymerlösung enthält 53 Gew.-% PTMEG-Diacetat mit der Esterzahl 61,2 (entspricht dem Molekulargewicht 1824 g/mol). Durch Hydrierung am Festbett in der Sumpffahrweise wird es in 60 Gew.-%iger Methanollösung mit durch 11 Gew.-% Bariumoxid aktivierten Kupferchromit-Katalysator der Fa. Süd-Chemie AG, München bei 220°C und 250 bar Wasserstoff in PTMEG mit der Hydroxylzahl 64,1 (Molekulargewicht 1750 g/mol) überführt. Das durch Eindampfen (1 mbar, 190°C) gewonnene Polymer ist sehr einheitlich und zeigt in der GPLC-Analyse die Heterogenität $M_w/M_n$ = 1,3. Die Farbzahl liegt bei 4 APHA, die Säurezahl ist kleiner 0,01 mg KOH/g.

### 3. Copolymerisation von THF und Ethylenoxid

Marktgängiges technisches Tetrahydrofuran wurde ohne Reinigungsschritt verwendet. Es wurde der in Beispiel 2 beschriebene Katalysator verwendet.

Die Polymerisation wurde in einer Apparatur durchgeführt, deren Prinzip in Abbildung 1 wiedergegeben ist. Der getrocknete Katalysator wurde in ein mit einem thermostatisierten Kühlmantel versehendes Reaktionsrohr (1) mit einem Inhalt von 5000 Volumenanteilen und einem Verhältnis von Durchmesser zu Länge von ungefähr 1:10 eingefüllt. Das Vorratsgefäß (2) mit einem Nutzvolumen von 7000 Volumenteilen wurde mit 5000 Teilen Tetrahydrofuran, 43 Teilen Wasser und 10,3 Teilen Ethylenoxid beschickt. Dabei wurden Tetrahydrofuran (4), Wasser (5) und Ethylenoxid (3) den dafür vorgesehenen Vorratsbehältern entnommen. Diese Mischung der Ausgangsverbindungen wurde auf das Katalysatorbett (1), dessen Temperatur auf 47 bis 49°C gehalten wurde, gegeben. Sobald das Katalysatorbett mit Frischzulauf gefüllt war, wurde im Vorratsgefäß noch einmal dieselbe Menge Frischzulauf hergestellt und diese nun fortlaufend über das Katalysatorbett geführt. Der Überlauf gelangte in das Vorratsgefäß (2) zurück. Durch kontinuierliches Eingasen von Ethylenoxid aus dem Vorratsgefäß (3) in die Zulaufmischung im Vorratsgefäß (2) wurde dafür gesorgt, daß die Ethylenoxid-Konzentration im Vorratsgefäß (2) konstant bei 0,1 Gew.-% gehalten wurde. Durch die Eingabemenge von 35 Teilen Ethylenoxid in der Stunde gelang es, diese Konzentration in der Zulaufmischung aufrechtzuerhalten. Nach 9 Stunden Reaktionszeit waren 325 Teile Ethylenoxid in der Reaktionsmischung eingetragen. Man ließ das Reaktionsgemisch nun noch bei 49°C nachreagieren. Es wurde mit der Pumpenleistung von 15000 Volumenteile/ h, die während des gesamten Versuchsdauer konstant gehalten wurde, aus dem Vorratsgefäß (2) im Kreise über den Katalysator (1) geführt. Danach war die Ethylenoxid-Konzentration in der Zulaufmischung auf 0 Gew.-% abgesunken. Die insgesamt ein- und umgesetzte Ethylenoxid-Menge betrug 315 Teile.

Dem Vorratsgefäß (2) wurden 5350 Teile Reaktionsmischung entnommen. Dieses erste Reaktionsgemisch wurde verworfen. Das Vorratsgefäß wurde anschließend erneut mit 5500 Teilen Frischzulauf beschickt, der aus 98,3% Tetrahydrofuran, 0,7 % Wasser und 0,2% Ethylenoxid bestand. Diese Mischung wurde nun mit einer Pumpenleistung von 12000 Volumenteile/ h durch das Katalysatorbett (1) im Kreise geführt. Gleichzeitig wurden in das Reaktionsgefäß (1) 36 Teile Ethylenoxid stündlich eingegast, wodurch es gelang, die Konzentration an Ethylenoxid im Vorratsgefäß (2) bei 0,1% zu halten. Nach 9 Stunden wurde die Ethylenoxid-Zufuhr unterbrochen. Das Reaktionsgemisch wurde 4 Stunden mit einer stündlichen Leistung von 12000/h im Kreise gepumpt. Das Reaktionsprodukt im Vorratsgefäß (2) wurde abgelassen, und das Vorratsgefäß in der oben beschriebenen Weise erneut mit der Mischung aus Tetrahydrofuran, Wasser und Ethylenoxid beschickt. Dann wurde die Polymerisation wie oben beschrieben 9 Stunden lang, bei weiteren 4 Stunden für die Nachbehandlung, ausgeführt. Das dabei erhaltene Reaktionsgemisch unterschied sich kaum noch von den Austrägen, die in 100 weiteren Polymerisationsansätzen dieser Art erhalten wurden.

Für die Isolierung des Copolymeren wurde das farblose Reaktionsgemisch (Farbzahl kleiner als 5 APHA) zunächst unter Normaldruck und dann im Vakuum bis 200°C im Filmverdampfer eingedampft. Das erhaltene Destillat bestand zu 98% aus reinem Tetrahydrofuran und zu 0,8% aus niedermolekularen Copolymeren mit einem durchschnittlichen Molekulargewicht von ca. 250. Aus der bei der Eindampfung erhaltenen Menge des Copolymeren errechnet sich ein 45%iger Umsatz des eingesetzten Tetrahydrofurans. Eingesetztes Ethylenoxid war vollständig umgesetzt worden und befand sich quantitativ mit einem Anteil von ca. 15 Gew.-% im erhaltenen Copolymerisat. Aus der Hydroxylzahl des Copolymeren errechnet sich dessen Molekulargewicht zu 1260. Die durch Gelpermeationschromatographie bestimmte Dispersität des Copolymeren war $M_w/M_n$ = 1,2, die Farbzahl war kleiner 5 APHA und die Säurezahl lag unter der Nachweisbarkeitsgrenze von 0,01 mg KOH/g. Cyclische oligomere Ether waren im Reaktionsprodukt nicht nachweisbar.

Ein fast gleiches Copolymerisat erhält man, wenn an Stelle des säurebehandelten Katalysators der gleiche Katalysator, der jedoch vorher keiner Säureaktivierung unterworfen wurde, eingesetzt wird.

### 4. Copolymerisation von THF, 3-Methyl-THF und Propylenoxid

In ein thermostatisiertes und gerührtes Reaktionsvolumen wurden 195 Teile des in Beispiel 2 beschriebenen Katalysators gefüllt. Dann wurde das Reaktionsgefäß mit einer Mischung aus 900 Teilen Tetrahydrofuran, 50 Teilen 3-Methyltetrahydrofuran und 40 Teilen Ameisensäure beschickt. Unter Rühren wurde das Gemisch dann gleichmäßig während 5 Stunden mit 10 Teilen Propylenoxid pro Stunde versetzt. Dadurch wurde die Propylenoxid-Konzentration im Reaktionsgemisch konstant bei 0,08 Gew.-% gehalten. Die Reaktionstemperatur betrug 50°C. Nach Zugabe der gesamten Propylenoxid-Menge wurde noch 4 Stunden bei Reaktionstemperatur gerührt. Durch Filtration wurde die erhaltene Lösung des Copolymeren vom Katalysator getrennt. Das Filtrat war frei von Propylenoxid und bestand aus 43% Copolymer, 53% Tetrahydrofuran und 4% 3-Methyltetrahydrofuran, wie durch Eindampfen bei Normaldruck und im Vakuum festgestellt. Das lösungsmittelfreie Copolymer hatte eine Verseifungszahl von 37 mg KOH und eine Hydroxylzahl von 13 mg KOH pro Gramm. Das Produkt enthielt weniger als 0,3% cyclische oligomere Ether. Das esterhaltige Polymerisat wurde nun mit der gleichen Menge Methanol und 10 Teilen Calciumhydroxid versetzt und destillativ an einer Kolonne mit 20 theoretischen Böden unter Abdestillieren des Ameisensäuremethylesters bei Normaldruck bei 32°C zum Glykol umgeestert. Nach vollständiger Umesterung wurde das als Umesterungskatalysator verwendete Calciumhydroxid abfiltriert und die methanolische Lösung des Copolymerisats zunächst bei Normaldruck, später im Vakuum am Filmverdampfer vollständig eingedampft. Das erhaltene Polymerisat war esterfreies, reines Glykol mit einer Hydroxylzahl von 51 mg KOH/g, was einem Molekulargewicht von 2210 entspricht. Das 13C-NMR-Spektrum zeigte, daß das Copolymer aus ca. 10% Propylenoxid, 87% Tetrahydrofuran und 3% 3-Methyltetrahydrofuran entstanden war. Die Dispersität des Produktes lag bei $M_w/M_n = 1,25$. Die Farbzahl lag unter 5 APHA und die Säurezahl unter 0,01 mg KOH/g.

**Patentansprüche**

1. Verfahren zur diskontinuierlichen oder kontinuierlichen Herstellung von Polytetramethylenethergolykoldiestern durch Polymerisation von Tetrahydrofuran oder/und substituierten Tetrahydrofuranen in Gegenwart von Carbonsäureanhydrid und eines Katalysators,
   **dadurch gekennzeichnet,**
   **daß** der Katalysator ein ungesäuerter oder protonisierter und calcinierter natürlicher amorpher Aluminiumsilicat-Katalysator ist, und daßman das Carbonsäureanhydrid dem Reaktionsgemisch so zuleitet, daß dessen Konzentration darin während der Polymerisation unter 1 Gew.-% gehalten wird.

2. Verfahren nach Anspruch 1,
   **dadurch gekennzeichnet,**
   daßman die Konzentration von Carbonsäureanhydrid im wesentlichen konstant hält.

3. Verfahren nach Anspruch 1 oder 2,
   **dadurch gekennzeichnet,**
   **daß** man den Diester in die Glykolform überführt.

4. Verfahren nach einem der Ansprüche 1 bis 3,
   **dadurch gekennzeichnet,**
   **daß** die Gesamtmenge des in die Reaktion eingebrachten Carbonsäureanhydrids von 0,1 bis 50 Molprozent bezogen auf Tetrahydrofuran beträgt.

5. Verfahren nach Anspruch 3,
   **dadurch gekennzeichnet,**
   **daß** die Gesamtmenge des in die Reaktion eingebrachten Carbonsäureanhydrids von 0,5 bis 20 Molprozent bezogen auf Tetrahydrofuran beträgt.

6. Verfahren zur diskontinuierlichen oder kontinuierlichen Herstellung von Polyoxybutylenpolyoxyalkylenglykolderivaten durch Copolymerisation von Tetrahydrofuran oder/und substituierten Tetrahydrofuranen mit Alkylenoxiden in Gegenwart von Verbindungen mit reaktivem Wasserstoff und eines Katalysators,
   **dadurch gekennzeichnet,**
   **daß** der Katalysator ein ungesäuerter oder protonisierter und calcinierter natürlicher amorpher Aluminiumsilicat-Katalysator ist, und
   **daß** man das Alkylenoxid dem Reaktionsgemisch so zuleitet, daß dessen Konzentration darin während der Polymerisation unter 1 Gew.-% gehalten wird.

7. Verfahren nach Anspruch 6,
   **dadurch gekennzeichnet,**
   **daß** man die Konzentration von Alkylenoxid im wesentlichen konstant hält.

8. Verfahren nach Anspruch 6 oder 7,
   **dadurch gekennzeichnet,**
   **daß** man das Derivat in die Glykolform überführt.

9. Verfahren nach einem der Ansprüche 6 bis 8,
   **dadurch gekennzeichnet,**
   **daß** das Alkylenoxid Ethylenoxid oder/und 1,2-Propylenoxid ist.

10. Verfahren nach einem der Ansprüche 6 bis 9,
    **dadurch gekennzeichnet,**
    **daß** die Verbindung mit reaktivem Wasserstoff Wasser ist.

11. Verfahren nach einem der Ansprüche 6 bis 9,
    **dadurch gekennzeichnet,**
    **daß** die Verbindung mit reaktivem Wasserstoff mindestens eine aliphatische oder/und aromatische Carbonsäure mit 1 bis 12 Kohlenstoffatomen ist.

**12.** Verfahren nach einem der Ansprüche 6 bis 11, **dadurch gekennzeichnet,** **daß** das Molverhältnis des eingesetzten Tetrahydrofurans zur Gesamtmenge des in der Reaktion eingebrachten Alkylenoxids zwischen 50 : 1 bis 1 : 1 ist.

**13.** Verfahren nach einem der Ansprüche 6 bis 12, **dadurch gekennzeichnet,** **daß** die Gesamtmenge der in der Reaktion eingesetzten Verbindung mit reaktivem Wasserstoff von 0,01 bis 10 Mol-%, bezogen auf Tetrahydrofuran, beträgt.

**14.** Verfahren nach einem der vorhergehenden Ansprüche, **dadurch gekennzeichnet,** **daß** man am Festbettkatalysator, der aus Formkörpern mit einem mittleren Durchmesser von 0,5 bis 10, vorzugsweise 1 bis 8 mm besteht, polymerisiert.

**15.** Verfahren nach einem der vorhergehenden Ansprüche, **dadurch gekennzeichnet,** **daß** das substiutierte Tetrahydrofuran mindestens ein in 2- oder/und 3-Position substituiertes Tetrahydrofuran ist.

**16.** Verfahren nach einem der vorhergehenden Ansprüche, **dadurch gekennzeichnet,** **daß** das substituierte Tetrahydrofuran 3-Methyltetrahydrofuran ist.

**17.** Verfahren nach einem der vorhergehenden Ansprüche, **dadurch gekennzeichnet,** **daß** man die Polymerisation bei einer Reaktionstemperatur von 0 bis 70°C durchführt.

**Claims**

**1.** A method for continuously or discontinuously producing diesters of polytetramethylene ether glycol by polymerization of tetrahydrofuran and/or substituted tetrahydrofurans in the presence of carboxylic acid anhydride and a catalyst, **wherein** the catalyst is a non-acidified or protonated and calcined natural amorphous aluminum silicate catalyst, and the carboxylic acid anhydride is added to the reaction mixture in such a manner that its concentration therein is kept below 1 wt.% during polymerization.

**2.** The method of claim 1, **wherein** the concentration of carboxylic acid anhydride is kept essentially constant.

**3.** The method of claim 1 or 2, **wherein** the diester is converted into the glycol form.

**4.** The method according to one of claims 1 to 3, **wherein** the overall quantity of carboxylic acid anhydride introduced into the reaction is 0.1 to 50 mol percent relative to the tetrahydrofuran.

**5.** The method of claim 3, **wherein** the overall quantity of carboxylic acid anhydride introduced into the reaction is 0.5 to 20 mol percent relative to the tetrahydrofuran.

**6.** A method for continuously or discontinuously producing derivatives of polybutylene oxide-polyalkylene oxide glycol by copolymerization of tetrahydrofuran and/or substituted tertahydrofurans with alkylene oxides in the presence of compounds containing reactive hydrogen and of a catalyst, **wherein** the catalyst is a non-acidified or protonated and calcined natural amorphous aluminum silicate catalyst, and the alkylene oxide is added to the reaction mixture in such a manner that its concentration therein is kept below 1 wt.% during polymerization.

**7.** The method of claim 6, **wherein** the concentration of alkylene oxide is kept essentially constant.

**8.** The method of claim 6 or 7, **wherein** the derivative is converted into the glycol form.

**9.** The method according to one of claims 6 to 8, **wherein** the alkylene oxide is ethylene oxide and/or 1,2-propylene oxide.

**10.** The method according to one of claims 6 to 9, **wherein** the compound containing reactive hydrogen is water.

**11.** The method according to one of claims 6 to 9, **wherein** the compound containing reactive hydrogen comprises at least one aliphatic and/or aromatic carboxylic acid having 1 to 12 carbon atoms.

**12.** The method according to one of claims 6 to 11,

**wherein**

the molar ratio of the tetrahydrofuran used in the reaction to the total amount of alkylene oxide introduced into the reaction is between 50:1 and 1:1.

13. The method according to one of claims 6 to 12, **wherein**

the total amount of compound containing reactive hydrogen used in the reaction is 0.01 to 10 mol % relative to the tetrahydrofuran.

14. The method according to one of the preceding claims,

**wherein**

polymerization is carried out on a fixed-bed catalyst consisting of molded particles with a mean diameter of 0.5 to 10 mm, preferably 1 to 8 mm.

15. The method according to one of the preceding claims,

**wherein**

the substituted tetrahydrofuran is at least a tetrahydrofuran substituted in the 2-and/or 3-position.

16. The method according to one of the preceding claims,

**wherein**

the substituted tetrahydrofuran is 3-methyl tetrahydrofuran.

17. The method according to one of the preceding claims,

**wherein**

polymerization is carried out at a reaction temperature of 0 to 70 °C.


**Revendications**

1. Procédé de production continue ou discontinue de diesters de polytétraméthylèneétherglycols par polymérisation de tétrahydrofurane et/ou de tétrahydrofuranes substitués, en présence d'anhydride carboxylique et d'un catalyseur,

**caractérisé en ce que**,

le catalyseur est un catalyseur à base de silicate d'aluminium amorphe naturel non acidifié ou protonisé et calciné, et que l'on introduit l'anhydride carboxylique dans le mélange réactionnel de telle sorte que sa concentration s'y trouve maintenue pendant la polymérisation en dessous de 1% en poids.

2. Procédé selon la revendication 1,

**caractérisé en ce que**,

l'on maintient la concentration d'anhydride carboxylique essentiellement constante.

3. Procédé selon la revendication 1 ou 2,

**caractérisé en ce que**,

l'on convertit ledit ester en la forme glycol.

4. Procédé selon l'une quelconque des revendications 1 à 3,

**caractérisé en ce que**,

la quantité totale d'anhydride carboxylique introduit dans le mélange réactionnel est de 0,1 à 50 mol% par rapport au tétrahydrofurane.

5. Procédé selon la revendication 3,

**caractérisé en ce que**,

la quantité totale d'anhydride carboxylique introduit dans le mélange réactionnel est de 0,5 à 20 mol% par rapport au tétrahydrofurane.

6. Procédé de production discontinue ou continue de dérivés de polyoxybutylènepolyoxyalkylèneglycols par copolymérisation de tétrahydrofurane ou/et de tétrahydrofuranes substitués avec des oxydes d'alkylènes en présence de composés comportant de l'hydrogène réactif et d'un catalyseur,

**caractérisé en ce que**,

le catalyseur est un catalyseur à base de silicate d'aluminium amorphe naturel, non acidifié ou protonisé et calciné, et que l'on introduit l'oxyde d'alkylène dans le mélange réactionnel de telle sorte que sa concentration s'y trouve maintenue, pendant la polymérisation, en dessous de 1% en poids.

7. Procédé selon la revendication 6,

**caractérisé en ce que**,

l'on maintient essentiellement constante la concentration en oxyde d'alkylène.

8. Procédé selon la revendication 6 ou 7,

**caractérisé en ce que**,

l'on convertit le dérivé en la forme glycol.

9. Procédé selon l'une quelconque des revendications 6 à 8,

**caractérisé en ce que**,

l'oxyde d'alkylène est l'oxyde d'éthylène ou/et l'oxyde de 1,2-propylène.

10. Procédé selon l'une quelconque des revendications 6 à 9,

**caractérisé en ce que**,

le composé comportant de l'hydrogène réactif est l'eau.

11. Procédé selon l'une quelconque des revendications 6 à 9,

**caractérisé en ce que**,

le composé comportant de l'hydrogène réactif est au moins un acide carboxylique, aliphatique ou/et aromatique comportant 1 à 12 atomes de carbone.

**12.** Procédé selon l'une quelconque des revendications 6 à 11,

> **caractérisé en ce que**,
> le rapport molaire du tétrahydrofurane utilisé, par rapport à la quantité totale de l'oxyde d'alkylène introduit dans le mélange réactionnel, se trouve entre 50:1 et 1:1.

**13.** Procédé selon l'une quelconque des revendications 6 à 12,

> **caractérisé en ce que**,
> la quantité totale du composé comportant de l'hydrogène réactif utilisé dans la réaction est de 0,01 à 10 mol% par rapport au tétrahydrofurane.

**14.** Procédé selon l'une quelconque des revendications précédentes,

> **caractérisé en ce que**,
> l'on polymérise sur un catalyseur en lit fixe, qui est constitué de corps de forme déterminée d'un diamètre moyen de 0,5 à 10, de préférence 1 à 8 mm.

**15.** Procédé selon l'une quelconque des revendications précédentes,

> **caractérisé en ce que**,
> le tétrahydrofurane substitué est au moins un tétrahydrofurane substitué en positions 2 ou/et 3.

**16.** Procédé selon l'une quelconque des revendications précédentes,

> **caractérisé en ce que**,
> le tétrahydrofurane substitué est le 3-méthyltétrahydrofurane.

**17.** Procédé selon l'une quelconque des revendications précédentes,

> **caractérisé en ce que**,
> la polymérisation est effectuée à une température de 0 à 70°C.

Figur 1